Europäisches Patentamt

European Patent Office

Office européen des brevets

(19)

(11) Publication number: **0 255 312**
A1

(12)
# EUROPEAN PATENT APPLICATION

(21) Application number: 87306598.1

(22) Date of filing: 27.07.87

(51) Int. Cl.³: **F 16 N 27/00**
F 15 D 1/02, F 16 L 55/02

(30) Priority: 28.07.86 GB 8618336

(43) Date of publication of application:
03.02.88 Bulletin 88/5

(84) Designated Contracting States:
BE CH DE FR GB IT LI NL SE

(71) Applicant: Interlube Systems Limited
Estover Road
Plymouth Devon, PL6 7PS(GB)

(72) Inventor: Moate, Peter David
"Tedburn" 25 Higher Compton Road
Hartley Plymouth Devon, PL3 5HZ(GB)

(74) Representative: Bardo, Julian Eason et al,
Abel & Imray Northumberland House 303-306 High
Holborn
London, WC1V 7LH(GB)

(54) Flow restrictor unit.

(57) A flow resistor unit for regulating the flow of a fluid comprises a plug (13) which has a helical groove (15) around its external surface and which fits closely within a fluid flow passageway (12) so that the groove forms a restricted flow path for fluid through the passageway. To eliminate the need for a machining operation to produce an accurately-dimensioned groove, the plug is a moulded component formed from a rigid thermoplastics material. The unit is particularly suitable for use in a lubrication system to regulate the amount of lubricant delivered to selected parts of the equipment on which the system is installed.

FIG. 2.

EP 0 255 312 A1

## Flow restrictor unit

The present invention relates to a restrictor unit for regulating the flow of a fluid and, more especially, to a flow restrictor unit for use in a lubrication system for supplying lubricant to selected parts of static/mobile equipment.

It is recognized that, for a wide variety of equipment, regular and adequate lubrication of relatively movable parts is essential if the equipment is to function reliably and efficiently. In the case of industrial machinery, for example, inadequate lubrication can result in lost production and poor productivity, as well as increased costs due to the need to purchase replacement parts. With this in view, lubrication systems have been developed for installation on equipment to facilitate the lubricating operation.

One known type of lubrication system comprises a plurality of outlets each arranged to deliver lubricant to a respective part of the equipment on which the system is installed. Lubricant is delivered to the outlets by a pump and, to ensure that each outlet receives an appropriate proportion of the output of the pump, the lubricant supply line to each outlet incorporates a respective flow restrictor: through an appropriate choice of the relative values of the restrictions, the required division of lubricant between the various outlets and hence between the various parts of the equipment can be achieved.

One known flow restrictor for use in a lubrication system comprises a metal plug around which a helical groove is machined. The plug is a tight fit in a bore which forms part of the lubricant supply-line to the lubricant outlet whereby the flow of lubricant is constrained to follow the helical groove and is restricted thereby. The accurate machining of the helical groove that is necessary to achieve the desired flow of lubricant and the need, during assembly, to ensure the tight fit of the plug in the bore both add to the production costs of a restrictor of this type.

A simpler form of restrictor for use in a lubrication system comprises a plain cylindrical plug supported centrally within a bore to define a narrow annular passageway between the plug and the wall of the bore. The bore forms part of the lubricant supply line to the lubricant outlet, the flow of lubricant being restricted by the narrow annular passageway around the cylindrical plug. This form of restrictor avoids the need for machining a helical groove in the plug and the need to ensure a tight fit of the plug in the bore. However, it suffers from the disadvantage that even a slight transverse displacement of the plug will (by altering the cross-sectional shape of the passageway around the plug) change the flow characteristics of the restrictor: this in turn will affect operation of the lubrication system.

It is already known, for example from GB-A-835272, that flow restrictor units can be formed by inserting a resilient plug member into a fluid flow passageway whereby a groove around the external surface of the plug member forms a restricted flow path. Such a plug member can readily be formed by moulding and the required fit of the plug member in the fluid passageway can readily be achieved but, because the plug member is resilient, the groove in its external surface is easily deformed and the flow restriction that will be provided by the unit cannot be accurately predicted. Consequently, such plugs have been used simply to provide a throttling effect and are not suitable for use when accurate predetermined flow regulation is required as, for example, in lubrication systems; in such cases, as already described, machined metal plugs have been used.

In some forms of lubrication system, the flow restrictor unit also incorporates a check valve. The check valve member, with its biasing spring, has conventionally been provided as a separate component within the unit; however, this increases the complexity of the unit and adds further to the production costs.

It is an object of the invention to provide a flow restrictor unit, suitable for use in a lubrication system, which is comparatively simple to produce and assemble but which will reliably provide a required flow restricting characteristic. It is a further object of the invention to provide such a restrictor unit which can readily be modified to include a check valve.

With this object in view it has now been found, contrary to previous assumptions, that it is possible to produce without expensive machining operations a flow restrictor unit which will regulate fluid flow with a substantial degree of accuracy. This is achieved, according to the invention, by using a plug member which is a moulded component formed from a rigid thermoplastic plastics material. It has been found that the use of a moulded, rather than a machined, plug member does not prevent close tolerances being imposed on the dimensions of the groove in the plug member (such tolerances being essential to enable a required flow rate of lubricant to be achieved) but it does enable the cost of producing the plug member to be reduced substantially.

Thus, the present invention provides a restrictor unit for regulating the flow of a fluid, the unit comprising a plug member which has a groove around its external surface and which fits closely within a fluid flow passageway so that the groove forms a non-adjustable restricted flow path for fluid within the passageway, characterized in that the plug member is a moulded component formed from a rigid thermoplastic plastics material. The groove may be helical.

The plug member may include a mounting for a check valve member. This mounting may be formed on an extension at one end of the plug member. When the unit incorporates a check valve member, the latter is advantageously a moulded component and is mounted on the plug member to co-operate with the walls of the flow passageway to permit lubricant flow in the passageway in one direction only.

In embodiments of the invention described herein, the flow passageway comprises a through-bore in a housing member of the unit. The restrictor unit includes a respective end cap at each end of the bore and the plug member is insertable in the bore from one end thereof. The cross-section of the groove in the plug member may be generally triangular or it may have the shape of a trapezium.

The plug member may have an internal bore.

The invention further provides a set of restrictor units, each as defined above, in which the cross-sectional area of the groove of one of the units is different from that of the groove of another of the units.

In a lubrication system for delivering lubricant to a plurality of lubricant outlets via flow restrictor units, each unit may be constructed in accordance with the invention with the cross-section of the groove in each plug member being selected to provide a predetermined flow restriction. The system may include a pump operable to deliver lubricant to the lubricant outlets.

By way of example, flow restrictor units constructed in accordance with the invention will now be described with reference to the accompanying drawings in which:

Fig. 1 is a diagram of a lubrication system incorporating flow restrictor units;

Fig. 2 is a longitudinal cross-section through a flow restrictor unit suitable for use in the system of Fig. 1;

Fig. 3 shows an alternative form of a component of the flow restrictor unit of Fig. 2;

Figs. 4 and 5 are, respectively, an end view of, and a longitudinal cross-section through, the component shown in Fig. 3;

Fig. 5A is an enlarged view of the portion V of Fig. 5;

Figs. 6 and 7 are views of another alternative form of the same component, corresponding to Figs. 3 and 5;

Fig. 7A is an enlarged view of the portion VII of Fig. 7, and

Fig. 8 is an end view in the direction of the arrow VIII of Fig. 6.

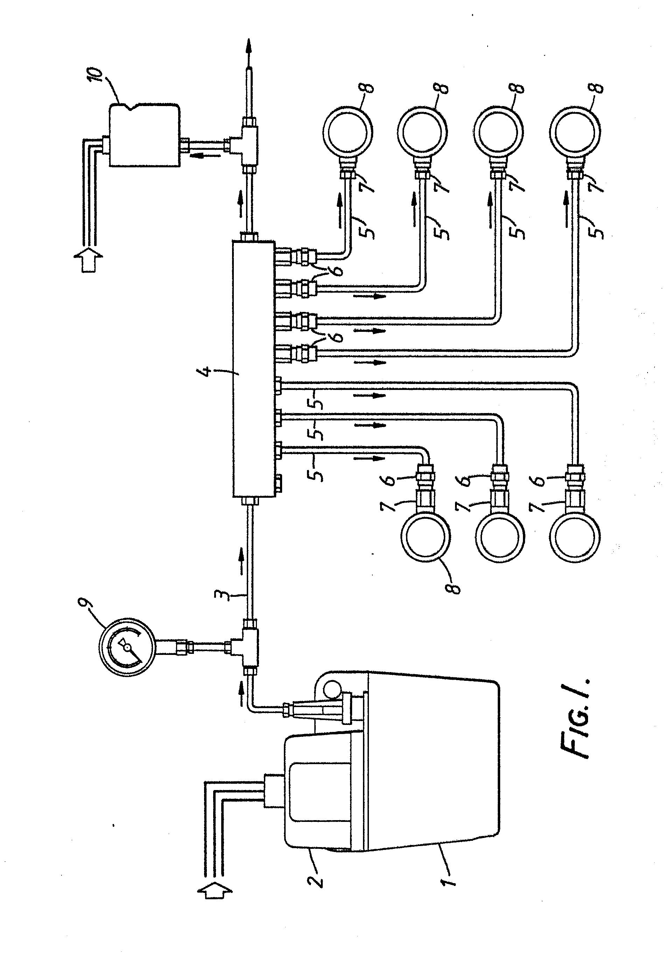

The lubrication system shown in Fig. 1 comprises a reservoir 1 from which lubricant is delivered by a pump which is located within the reservoir and is not visible in Fig. 1. In the system shown in Fig. 1, the pump is driven by an electric motor 2 but it could, alternatively, be pneumatically, hydraulically or manually operated.

The lubricant delivered by the pump passes, <u>via</u> a supply line 3, to a manifold 4 to which are connected several flow lines 5 each containing a respective flow restrictor unit 6 described in greater detail below. Each flow line 5 terminates in an outlet 7 arranged to supply lubricant to a respective bearing 8 of the equipment in which the system is installed. Preferably, each restrictor unit 6 is located at the outlet end of its respective flow line 5 but, where this is not possible or convenient (for example, because of the construction of the equipment in which the system is installed), the restrictor unit can be located at the inlet (ie manifold) end of the flow line: both of these locations are shown in Fig. 1. Further lubricant flow lines 5 can be similarly connected to the supply line 3 downstream of the manifold 4.

Fig. 1 also shows a pressure gauge 9 connected to the supply line 3 to provide a visual indication of lubricant pressure and an electrically-operated warning unit 10, also connected to the supply line 3, to provide an audible warning in the event of a loss of pressure.

The lubricant pump in reservoir 1 can operate to deliver lubricant continuously or at regular intervals determined either by time or by usage of the equipment in which the system is installed. In each case, the restrictor units 6 in the flow lines 5 regulate the proportions in which lubricant is divided between the bearings 8 and, by altering the relative flow restricting characteristics of the units 6, the manner in which lubricant is divided between the various bearing points can also be altered.

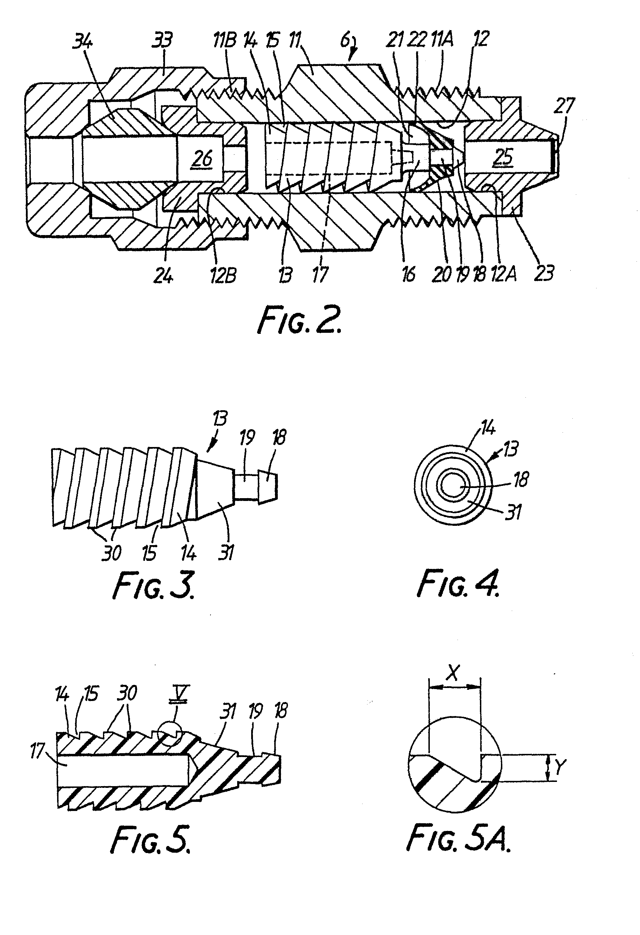

The construction of one of the restrictor units 6 is shown in Fig. 2. The unit comprises a housing 11 having a longitudinal bore 12 the ends 12A and 12B of which form, respectively, a lubricant inlet and a lubricant outlet. Within the bore 12 is a flow restricting plug 13 which is a moulded component and is formed from a rigid thermoplastic plastics material. The plug has a generally cylindrical body 14 with a helical groove 15 in its outer surface, a shaped stem 16 extending from the end of the cylindrical body 14 facing the inlet 12A and a closed bore 17 extending into the cylindrical body 14 from the other end. The diameter of the cylindrical body 14 is such that it is an interference fit in the housing bore 12 whereby the groove 15 defines a helical passageway, within the bore 12, between the ends of the cylindrical body 14 of the plug 13.

The stem 16 of the plug is of smaller diameter than the body 14 and has a tapered tip 18 and an intermediate portion 19, of reduced diameter, on which is mounted a check valve member 20. The valve member 20, which is also a moulded component, is of frusto-conical form and is mounted so that it tapers outwards in a direction away from the tip 18 of the plug 13 and into contact with the wall of the housing bore 12. The base of the valve member is recessed, at 21, whereby the portion of the valve member surrounding the recess forms, in effect, a skirt 22 which can be deflected inwards by lubricant pressure at the inlet 12A to permit the passage of lubricant from the inlet to the helical passageway 15. Flow of lubricant in the return direction will, however, be prevented by engagement of the skirt 22 with the wall of the bore 12.

End caps 23, 24 are located in the inlet and outlet 12A, 12B respectively, and the housing 11 is threaded externally at 11A, 11B to enable the restrictor unit to be connected into one of the lubricant flow lines 5 of the system (Fig. 1), for example by means of a cap nut 33 and ring 34 as shown at the outlet end of the unit in Fig. 2. Each end cap has a through-bore 25, 26 for the passage of lubricant, and the bore 25 in the inlet end cap 23 contains a filter 27.

The flow rate of the unit is determined mainly by the cross-section of the groove 15 in the plug 13 and, because the plug is formed from a rigid plastics material, this cross-section remains substantially unchanged when the plug is inserted in the housing bore 12 so that the flow rate of the unit can be reliably predicted.

To ensure that a restrictor unit provides a required flow rate with sufficient accuracy, close tolerances must be placed on the dimensions that determine the cross-section of the groove 15. It has been found that these can be achieved despite the fact that the plug 13 is a moulded plastics component rather than a machined metal component. Moreover, because the plug is formed from a plastics material, it can be pressed into the bore 12 without being scraped or scored and without producing any swarf, despite the fact that it is an interference fit.

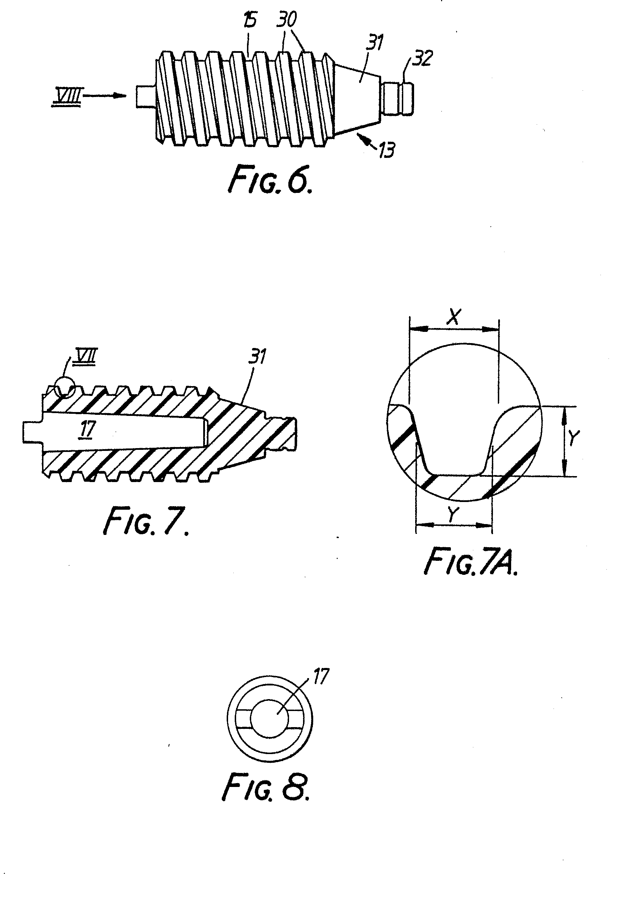

A range of plugs 13 would normally be available, having grooves 15 of differing cross-sections (see also Figs. 5A and 8A described below) providing different flow rates. The overall size of the plugs (ie length and outer diameter) would, however, be constant so that only one size of housing 11 would be required.

Typically, the maximum width of the groove 15 is within the range of from 0.3mm to 1.08mm and the maximum depth is within the range of from 0.16mm to 0.74mm, offering (at a lubricant pressure of 100psi) a flow rate within the range of from 0.1cc/min to 50cc/min approximately. Typically, the length of the body portion 13 is of the order of 1cm and the outer diameter of the body portion is of the order of 4.84mm.

The plug 13 can be moulded from any suitable rigid thermoplastic plastics material, for example filled nylon or Acetal. Once inserted into the housing bore, the plug 13 should maintain an interference fit and ensure that lubricant is constrained to follow the helical groove 15. The housing 11 can be a machined metal component as can the end caps 23, 24. A suitable metal for the housing 11 and the inlet end cap 23 is brass while a suitable metal for the outlet end cap 24 is a carbon steel. However, the outlet end cap 24 need not be a metal component but could, for example, be formed from filled nylon.

The check valve member 20 is preferably moulded from rubber, for example 70-75 Viton, but could, alternatively, be formed from polyurethane. The valve member functions to permit lubricant flow, at pressures above a predetermined minimum, from the inlet 12A to the outlet 12B of the unit but to prevent lubricant flow in the reverse direction. The valve member is required, in intermittent systems, to ensure that lubricant does not drain from a bearing when not being supplied by the pump but can be omitted from continuous systems where lubricant pressure and flow are low. It will be understood that, if the valve member 20 is to be omitted, no modification of the plug 13 itself is necessary.

The construction of the restrictor unit shown in Fig. 2 facilitates assembly and makes it possible for the assembly process to be mechanized. The assembly steps required are:

(i)     the location of the valve member 20 on the stem 16 of the restricting plug by pushing the tip 18 of the stem through a central bore in the valve member;

(ii)    the location of the plug 13 in the housing bore 12 by pushing the plug into the bore from the outlet end 12B, and

(iii)   the insertion of the end caps 23, 24.

During the assembly step (ii), a suitable tool can be located in the bore 17 of the plug 13 to assist in inserting the plug in the housing.

Following assembly, the unit is tested to ensure that it does not leak at low pressures and then to ensure that it provides the required flow of lubricant. Advantageously, the testing process is also mechanized.

To enable one plug to be distinguished easily from another offering a different flow rate, particularly when the assembly process is mechanized as just described, the internal bores 17 of the plugs can be of different lengths: mechanical assessment of a plug can then be carried out during the automatic assembly process to check that the correct plug is being used. In addition, the plugs can be colour coded as a visual aid to the operator.

An alternative form of plug 13 is shown in Figs. 3 to 5. The plug is generally similar to that shown in Fig. 2 but the turns of the helical groove 15 are spaced one from another, leaving intermediate ungrooved portions 30 on the outer surface of the cylindrical body 14 of the plug. This shaping provides increased contact between the plug and the wall of the bore 12 and reduces the risk of leakage. In addition, the base 31 of the stem portion of the plug is tapered, to facilitate the moulding of the plug.

The cross-section of the groove 15 of this plug is shown more clearly in the enlarged view of Fig. 5A. The cross-section is generally triangular and asymmetric with the walls of the groove being inclined to one another at an angle of 60°. As with the plug shown in Fig. 2, a range of plugs of the type shown in Figs. 3 to 5 would normally be provided, the plugs having grooves of differing widths "X" and heights "Y" (typically within the ranges 0.3mm to 1.08mm and 0.16mm to 0.74mm respectively). To enable required flow rates to be achieved with sufficient accuracy close tolerances are placed on these dimensions, as already mentioned and as described in greater detail below.

The pitch of the groove 15 can differ from one plug to another, typically increasing as the dimensions of the groove increase. For example, for the groove of smallest dimensions (a width X of 0.3mm and a depth Y of 0.16mm) a pitch of 0.6mm can be employed while, for the groove of largest dimensions (a width X of 1.08mm and a depth Y of 0.79mm) a pitch of 1.4mm can be employed.

Yet another alternative form of plug 13 is shown in Figs. 6 to 8. This form is similar to that of Figs. 3 to 5 in that the turns of the helical groove 15 are spaced from one another but, in this case, the groove has a symmetric cross-section in the shape of a trapezium rather than the asymmetric, triangular cross-section shown in Fig. 3 and also in Fig. 2. In addition, the tapered tip 18 and reduced diameter portion 19 are replaced by a cylindrical grooved tip 32 on which a suitably-formed check valve member (not shown) can be mounted, while the internal bore 17 is tapered instead of having a constant cross-section.

The cross-section of the groove 15 of this plug is shown more clearly in the enlarged view of Fig. 7A. The groove has a flat base 33 and side walls 34 inclined to the base at an angle of, typically, 105°. As indicated in Fig. 7A, the height of the groove "Y" is the same as its width at mid-height and slightly less than the width "X" of the mouth of the groove. Typically, the minimum values of "X" and "Y" are 0.25mm and 0.2mm respectively with a pitch of 0.7mm then being employed for the groove.

As already mentioned, close-tolerances on the dimensions of the groove 15 are desirable if accurate flow rates are to be achieved. For example, in the plug shown in Figs. 6 to 8 the allowed tolerance on the dimensions X and Y is preferably no greater than 0.08mm, regardless of the size of those dimensions. Equally, the plug must be a good fit in the bore 12 of the housing so that close tolerances are also placed on the outer diameter and circularity of the plug. Thus, for a plug of outer diameter of 4.85mm a maximum tolerance of 0.025mm is preferred with a tolerance of 0.05 on circularity. While it would be expected that these tolerances could be achieved if the plug were a machined metal component it would not be expected that they could be achieved by moulding the plug from a rigid plastics material. Nevertheless, it has been found that they can be achieved and that it is indeed practical to use a moulding process to produce plastic restrictor plugs as shown in the drawings.

It will be appreciated that, although the plugs 13 of the restrictor units described above all have helical grooves 15, this is not essential and any other groove providing the required restriction could be formed on the outer surface of the plug. However, a helical groove is preferred on account of its length which enables the flow rate to be more accurately controlled.

It will also be appreciated that, although the restrictor units have been described as being for use in regulating the flow of lubricant in a lubrication system, they could have other uses and could be used for regulating the flow of other fluids. The material from which the plugs 13 are formed will, of course, be selected having regard to the fluid that is to be regulated: for water or a water-based liquid, for example, a polycarbonate could be used.

Claims:

1. A restrictor unit for regulating the flow of a fluid, the unit comprising a plug member (13) which has a groove (15) around its external surface and which fits closely within a fluid flow passageway (12) so that the groove forms a non-adjustable restricted flow path for fluid through the passageway, characterized in that the plug member (13) is a moulded component formed from a rigid thermoplastic plastics material.

2. A unit as claimed in claim 1, in which the groove (15) is helical.

3. A unit as claimed in claim 1 or claim 2, in which the plug member (13) includes a mounting (19) for a check valve member.

4. A unit as claimed in claim 3, in which the mounting (19) is provided by an extension (16) at one end of the plug member.

5. A unit as claimed in claim 3 or claim 4 and including a check valve member (20) mounted on the plug member, the valve member co-operating with the walls of the flow passageway (12) to permit fluid flow in the passageway in one direction only.

6. A unit as claimed in claim 5, in which the valve member is a moulded component.

7. A unit as claimed in claim 2, in which the turns of the groove (15) are spaced apart from one another and the intermediate, ungrooved portions (30) of the external surface of the plug member are in close contact with the wall of the flow passageway (12).

8. A unit as claimed in any one of the preceding claims, in which the maximum width (X) of the groove (15) is within the range of from 0.25mm to 1.1mm.

9. A unit as claimed in any one of the preceding claims, in which the maximum depth (Y) of the groove (15) is within the range of from 0.15mm to 0.75mm.

10. A unit as claimed in any one of the preceding claims, in which the plug member (13) has an internal bore (17).

11. A set of restrictor units, each unit being as claimed in any one of the preceding claims, in which the cross-sectional area of the groove (15) of one of the units is different from that of the groove of another of the units.

12. A set of restrictor units as claimed in claim 11, in which the plug members of the units are of substantially the same size overall.

13. A set of restrictor units as claimed in claim 11 or claim 12, when appended to claim 10, in which plug members (13) having grooves (15) of differing cross-sectional areas have internal bores (17) of different dimensions.

14. A lubrication system for delivering lubricant to a plurality of lubricant outlets (7) via respective flow restrictor units (6) each of which is as claimed in any one of claims 1 to 10, the cross-section of the groove (15) in each plug member (13) being selected to provide a predetermined flow restriction.

FIG. 1.

FIG. 2.

FIG. 3.

FIG. 4.

FIG. 5.

FIG. 5A.

FIG. 6.

FIG. 7.

FIG. 7A.

FIG. 8.

| | European Patent Office | **EUROPEAN SEARCH REPORT** | Application number |
|---|---|---|---|

025ЬЬЬ1z

EP 87 30 6598

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A-2 109 384 (RHONE-POULENC)<br><br>* Page 1, line 14 – page 5, line 18; figures 1-5 * | 1-12, 14 | F 16 N 27/00<br>F 15 D 1/02<br>F 16 L 55/02 |
| | --- | | |
| Y | GB-A-1 128 613 (BRITISH OXYGEN)<br><br>* Page 1, line 61 – page 2, line 84; figures 1-3 * | 1,2,7, 10 | |
| | --- | | |
| Y | US-A-2 392 030 (DAVIS)<br><br>* Page 2, lines 27-72; figures 1,2 * | 1,2,7, 11,12, 14 | |
| A | | 13 | TECHNICAL FIELDS SEARCHED (Int Cl 4) |
| | --- | | |
| Y | DE-A-1 425 414 (CRAF)<br>* Pages 4,5; figure 2 * | 3-6,10 | F 16 N<br>F 16 K<br>F 16 L<br>F 15 D |
| | --- | | |
| Y | GB-A- 920 205 (AUTO RESEARCH)<br>* Page 3, lines 34-47; figures 1-6 * | 8-10 | |
| | --- | | |
| A | US-A-4 577 728 (OIL RITE) | | |
| | --- -/- | | |

The present search report has been drawn up for all claims

| Place of search | Date of completion of the search | Examiner |
|---|---|---|
| THE HAGUE | 02-11-1987 | KOOIJMAN F.G.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| | **DOCUMENTS CONSIDERED TO BE RELEVANT** | | Page 2 | |
|---|---|---|---|---|
| Category | Citation of document with indication, where appropriate, of relevant passages | | Relevant to claim | CLASSIFICATION OF THE APPLICATION (Int. Cl.4) |
| A | DE-A-2 149 689 (KUFSTEINER ARMATUREN) | | | |
| | --- | | | |
| A | CH-A- 324 295 (MALERME) | | | |
| | --- | | | |
| A | US-A-3 851 896 (OLSON) | | | |
| | --- | | | |
| A,D | GB-A- 835 272 (BROMSREGULATOR) | | | |
| | --- | | | |
| A | DE-A-2 706 856 (SECRETARY OF STATE) | | | |
| | --- | | | |
| A | CH-A- 238 724 (TECALEMIT) | | | TECHNICAL FIELDS SEARCHED (Int. Cl.4) |
| | ----- | | | |

The present search report has been drawn up for all claims

| Place of search | Date of completion of the search | Examiner |
|---|---|---|
| THE HAGUE | 02-11-1987 | KOOIJMAN F.G.M. |